# EUROPÄISCHE PATENTSCHRIFT

(11) **EP 0 583 588 B1**
(45) Veröffentlichungstag und Bekanntmachung des Hinweises auf die Patenterteilung: **04.09.1996**
(21) Anmeldenummer: 93110648.8
(22) Anmeldetag: 03.07.1993
(51) Int. Cl.: B60J 1/17, B60J 10/04

(54) **Kurbelfenster in der Fahrerhaustür eines Lkw**
Sliding window in the cab door of a commercial vehicle
Fenêtre coulissante dans la porte d'une cabine de véhicule utilitaire

(30) Priorität: 06.08.1992 DE 4225974
(43) Veröffentlichungstag der Anmeldung: 23.02.1994
(73) Patentinhaber: MAN Nutzfahrzeuge Aktiengesellschaft, 80976 München (DE)
(72) Erfinder: Koch, Erich, D-85757 Karlsfeld (DE); Watzek, Gerhard, D-80935 München (DE)

(56) Entgegenhaltungen:
- EP-A- 0 459 219
- FR-A- 2 580 326
- GB-A- 2 110 281

## Beschreibung

Die Erfindung betrifft ein Kurbelfenster in der Fahrerhaustür eines Lkw gemäß dem Oberbegriff des Anspruches 1.

Eine bekannte Methode zur Montage und Führung von Kurbelscheiben ist die Anwendung von U-förmigen Gummi-Samtschienen, in denen die Fensterscheibe gleitet Die Samtschiene ist so gestaltet, daß sie ihrerseits in einer U-förmigen Schiene aus Metall oder sonstigen Materialien geklemmt, geklebt oder anderweitig befestigt ist. Dieses Konstruktionsprinzip verlangt, je nach Gestaltung der Tür, die Montage der Samtschiene zusammen mit der Scheibe. Dabei wird die Scheibe von oben oder unten in das Innere der Tür mittels Einschiebens durch den Fensterschacht eingeführt und die Samtschiene gleichzeitig oder danach jeweils im Bereich ober- oder unterhalb des Fensterschachtes angebracht.

Aus der FR-A-2 580 326 ist weiterhin ein Kurbelfenster in einer Fahrzeugtür mit einer 2-teiligen Fensterführungsschiene bekannt, wobei diese einen äußeren und einen inneren Teil aufweist und innerhalb des Fensterrahmens der Fahrzeugtür angeordnet und befestigt ist.

Der Erfindung liegt die Aufgabe zugrunde, unter Beibehaltung hoher Dichtwirkung die Montage von Kurbelfenstern zu vereinfachen und zu erleichtern.

Diese Aufgabe wird erfindungsgemäß durch die Merkmale des Anspruches 1 gelöst

Auf diese Weise ist ein auf die Maße von Fensterscheibe und Fensterrahmen exakt abgestimmtes Profil einer Fensterführung gegeben, das neben hoher Dichtzuverlässigkeit auch den Anforderungen leichter Montierbarkeit entspricht. Letztere wird insbesondere durch die Konfektionierung des äußeren Teils der Fensterführungsschiene als geschlossenem Ring erzielt, wobei dieser mit zwei an seinem Umfang angeklebten oder vulkanisierten Fensterführungsprofilstücken verbunden ist. Somit kann die Montage des Kurbelfensters wesentlich vereinfacht und erleichtert werden, indem die Fensterscheibe mit der vormontierten, äußeren Fensterführungsschiene und den sich daran durch Klebung oder Vulkanisation anschließenden Fensterführungsprofilstücken direkt von oben einschiebbar ist. Darüber hinaus können auch entsprechend der erfindungsgemäßen Lösung Toleranzempfindlichkeiten und unzureichende Klemmungsfunktion der Fensterführungsschienen, wie es beispielsweise bei der Verwendung U-förmiger Samtschienen, Clips- oder Klebebefestigungen und dergleichen der Fall sein kann, vermieden werden.

Nach einer Weiterbildung der Erfindung kann der äußere Teil der Fensterführungsschiene als U-Profil mit einer von einem U-Schenkel um ca. 90° abgewinkelten, einstückig mit ihm verbundenen Fahne mit zwei zusätzlichen Dichtlippen ausgebildet sein. Eine im Bereich eines Fensterschachtes der Fahrerhaustür vorgesehene außenseitige Fensterschachtabdichtung ist aus dem äußeren Teil der Fensterführungsschiene mit abgeklinkter Fahne gebildet. Dies ermöglicht in rationeller Weise die Rundumausbildung der äußeren Fensterführungsschiene aus einem vorgefertigten Stück, was unter anderem auch eine reduzierte Lagerhaltung zur Folge hat.

Nach einer Weiterbildung der Erfindung kann das innere Teil der Fensterführungsschiene als U-förmiges Klemmprofil mit einem kopfseitigen Schlauchteil und zwei sich seitlich von den Schenkeln des U-Profiles erstreckenden Dichtlippen ausgebildet sein. Als innenseitige Fensterschachtabdichtung kann ein Klemmprofil mit Dichtfahne vorgesehen sein, das sowohl zur Fensterscheibe als auch zu einer türinnenseitigen Türbrüstungsverkleidung oder dergleichen dichtend ausgebildet ist.

Nach einer Weiterbildung der Erfindung kann die Fensterscheibe an mindestens drei Stellen von Dichtlippen der beiden Teile der Fensterführungsschiene eingefaßt sein. Die beiden Teile der Fensterführungsschiene können sich dabei im U-Boden an mindestens zwei Stellen gegeneinander abdichten. Auf diese Weise ist eine hohe Dichtwirkung der Fensterführungsschiene zwischen Fensterscheibe und innerem Fensterrahmen gewährleistet.

Nach einer Weiterbildung der Erfindung kann der äußere Teil der Fensterführungsschiene auf einen Türfalz aufgesteckt sein und mittels eines Rollforming-Verfahrens oder dergleichen haftend zurollbar sein.

Nach einer Weiterbildung der Erfindung können zur Aufnahme der abgekurbelten Fensterscheibe im inneren Bereich eines Türschachtes der Fahrerhaustür Halteprofile für die in ihnen einliegenden Fensterprofilstücke angeordnet sein.

In vorteilhafter Weise ist das Verfahren zur Montage und Wirksamsetzung der Dichtungsfunktion des Kurbelfensters gelöst. Nach dem Einlegen und Zurollen des äußeren Teiles der Fensterführungsschiene auf die Türfalze - die an der Fensterführungsschiene angeordneten beiden Fensterführungsprofilstücke verbleiben vorerst nach unten hängend - und dem Anbringen einer entsprechenden Fensterhebevorrichtung kann die Fensterscheibe nach unten gekurbelt werden, wobei die beiden nach unten hängenden Fensterführungsprofilstücke automatisch in die im Türschacht angeordenten Halteprofile eingedrückt werden. Auf diese Weise brauchen die Fensterführungsprofilstücke nicht extra in mühsamer Handarbeit eingelegt werden.

Die Erfindung ist in einem Ausführungsbeispiel dargestellt und beschrieben.
Es zeigen:
- Fig. 1: eine Fahrerhaustür in der Seitenansicht,
- Fig. 2: eine Fahrerhaustür gemäß Schnitt A-A der Fig. 1,
- Fig. 3: eine Fahrerhaustür gemaß Schnitt B-B der Fig. 1,
- Fig. 4: eine konfektionierte Fensterführungsschiene und
- Fig. 5: einen Schnitt C-C gemäß Fig. 4.

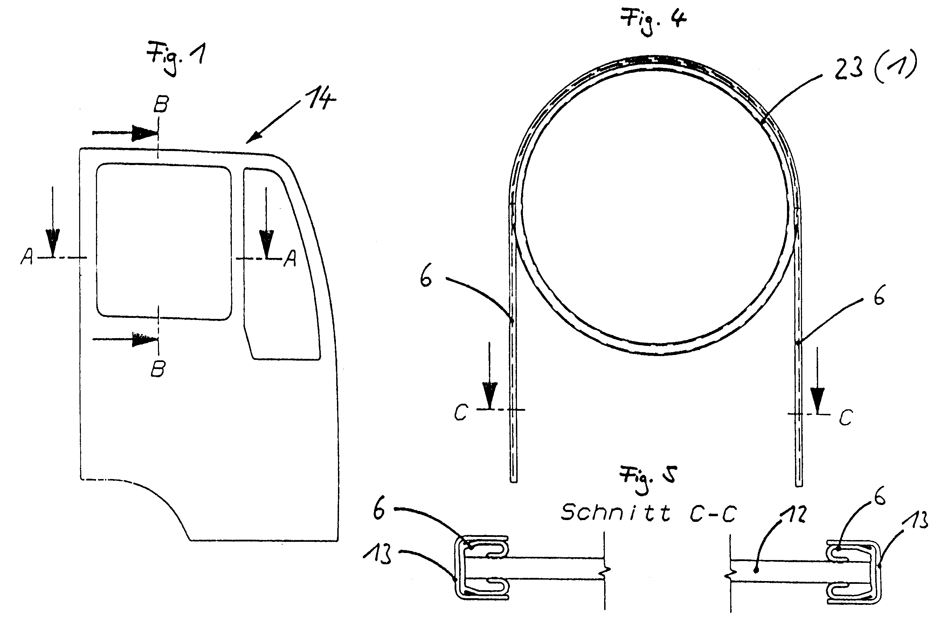

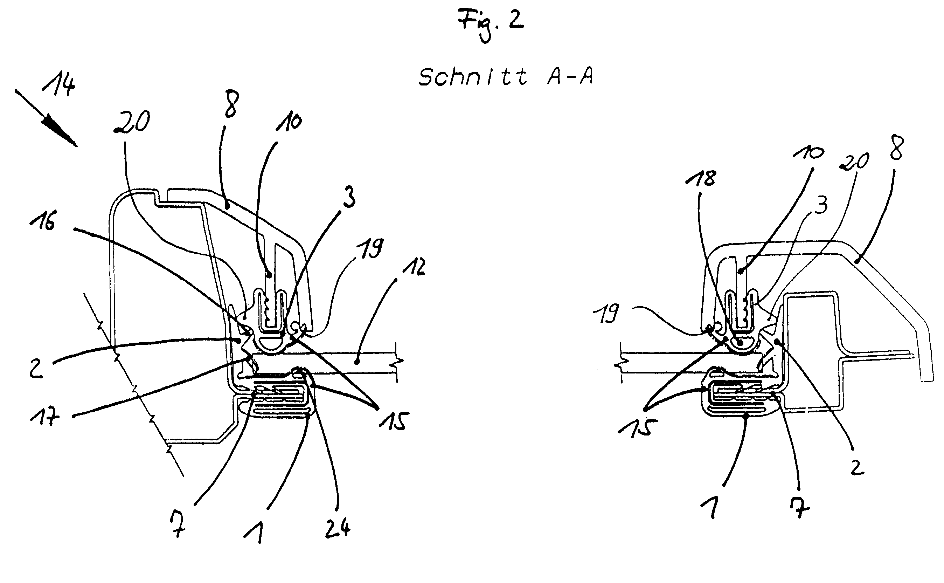

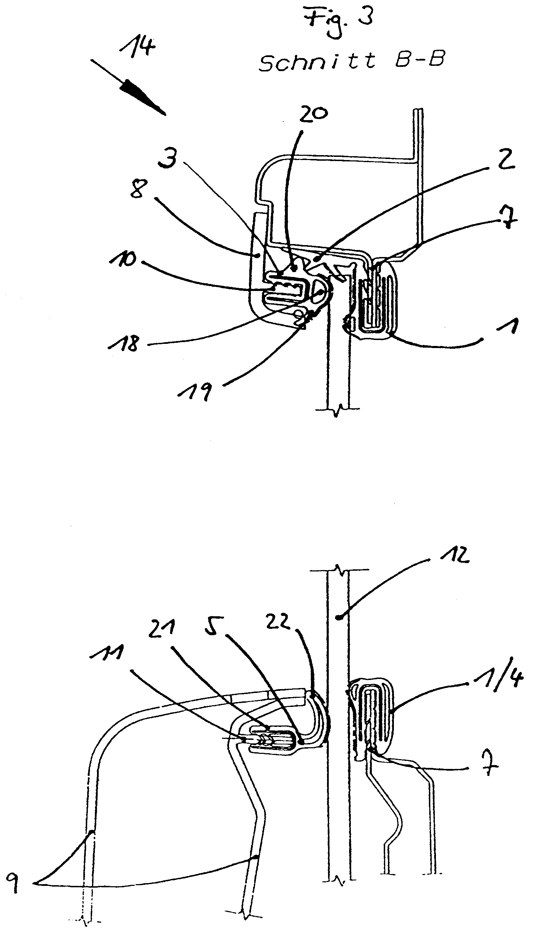

Fig. 1 zeigt ein Kurbelfenster 14 in der Fahrerhaustür eines Lkw's. Die jeweiligen Schnitte A-A bzw. B-B durch das hier gezeigte Kurbelfenster 14 sind in den Fig. 2 bzw. 3 ersichtlich.

In Fig. 2 ist gemäß des Schnittes A-A auf dem Türfalz 7 am Türrahmen der äußere Teil (1) der Fensterführungsschiene 15 aufgesteckt und mittels des bekannten Rollforming-Verfahrens zugerollt. Der äußere Teil 1 dichtet mit seinem Schlauchteil 24 gegen die Fensterscheibe 12 ab. Der innere Schenkel des äußeren Teiles 1 der Fensterführungsschiene 15 ist durch eine Fahne 2 gebildet, die einerseits mit einer Dichtlippe 17 gegen den seitlichen Rand der Fensterscheibe 12 und mit einer weiteren Dichtlippe 16 gegen den inneren Teil 3 der Fensterführungsschiene 15 abdichtet.

Der innere Teil 3 der Fensterführungsschiene 15 ist auf einer Steckfahne 10 eines inneren Fensterrahmens 8 aufgepreßt. Das innere Teil 3 der Fensterführungsschiene 15 liegt mit einem Schlauchteil 18 an der Fensterscheibe 12 dichtend an. Der innere Teil 3 der Fensterführungsschiene 15 weist im unteren Bereich seiner U-förmigen Schenkel Dichtlippen 19 und 20 auf, die gegen die Fahne 2 des äußeren Teils 1 der Fensterführungsschiene 15 und gegen den inneren Fensterrahmen 8 dichten. Die beiden Teile 1 und 3 bilden nach ihrer zusammenführenden Montage die ein geschlossenes 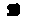 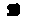 U" darstellende Fensterführungsschiene 15.

In Fig. 3 ist der Schnitt B-B gemäß Fig. 1 dargestellt. Hierbei ist im oberen Bereich des Kurbelfensters 14 die Situation ähnlich wie gemäß Schnitt A-A (Fig. 2) und wird deshalb nicht mehr ausführlich beschrieben.

Im unteren Bereich des Kurbelfensters 14 ist die Fensterscheibe 12 in einen Fensterschacht der Fahrerhaustür eintauchend dargestellt. Die Fensterscheibe 12 ist eingefaßt von einer außenseiteigen Fensterschachtabdichtung 4, die auf den Türfalz 7 aufgesteckt ist und einer innenseitigen Fensterschachtabdichtung 5, die auf einer Steckfahne 11 einer türinnenseitigen Türbrüstungsverkleidung 9 angeordnet ist. Die außenseitige Fensterschachtabdichtung 4 ist aus dem äußeren Teil 1 der Fensterführungsschiene 15 gebildet, wobei die Fahne 2 abgeschnitten wurde, so daß der Durchlaß für die Fensterscheibe 12 nicht behindert wird. Die innenseitige Fensterschachtabdichtung 5 ist durch ein eine Dichtfahne 22 aufweisendes Klemmprofil 21 gebildet, das auf der Steckfahne 11 angeordnet ist. Die Dichtfahne 22 legt sich mit ihrem schlauchartigen Teil dichtend an der Fensterscheibe 12 an und dichtet mit ihrem Ende gegen die Türbrüstungsverkleidung 9 ab.

Fig. 4 zeigt schematisch die geschlossene Rundumausbildung des einteiligen, äußeren Teils 1 der Fensterführungsschiene - Ring 23 - mit den beiden am äußeren Teil 1 befestigten, nach unten hängenden Fenstertführungsprofilstücken 6.

Dabei ist in einem unteren Teilbereich des äußeren Teiles 1 der Führungsschiene - Ring 23 - die Fahne 2 für den Durchgang der Fensterscheibe 12 ausgeklinkt (siehe insbesondere Fig. 3). Die nach unten hängenden Fensterführungsprofilstücke 6 sind dabei am äußeren Teil 1 angeklebt oder anvulkanisiert, so daß dieses vorgehend beschriebene Gesamtteil 1 , 4, 6 komplett an der Fensterscheibe befestigt und anschließend nach Anbringung einer entsprechenden Hebevorrichtung nach unten gekurbelt werden kann. Dabei können sich in einem Arbeitsgang beim Herunterkurbeln der Fenserscheibe 12 die Fensterführungsprofilstücke 6 automatisch in im Türschacht angeordnete Halteprofile 13 einlegen, womit ein separater Montagevorgang eingespart wird (siehe insbesondere Fig. 5). Danach erfolgt das Schließen des im Fensterbereich umlaufenden Profiles durch die Montage des inneren Fensterrahmens 8 auf die Fahrerhaustür, wobei auf die Steckfahne 10 des Fensterrahmens 8 das innere Teil 3 der Fensterführungsschiene 15 vormontiert ist (Fig. 2, 3).

Danach erfolgte die Montage der Türbrüstungsverkleidung 9, auf deren dafür vorgesehenen Steckfahne 11 die innenseitige Fensterschachtabdichtung 5 vormontiert ist, wodurch eine geschlossene Schachtabdichtung und die vollständige untere Abstützung der Fensterscheibe 12 erzielt wird (Fig. 3).

### Bezugszeichenliste

- 1: äußerer Teil von 15
- 2: Fahne an 1
- 3: innerer Teil von 15
- 4: äußere Fensterschachtabdichtung
- 5: innere Fensterschachtabdichtung
- 6: Fensterführungsprofilstücke
- 7: Türfalz
- 8: innerer Fensterrahmen
- 9: Türbrüstungsverkleidung
- 10: Steckfahne an 8
- 11: Steckfahne an 9
- 12: Fensterscheibe
- 13: Halteprofil
- 14: Kurbelfenster
- 15: Fensterführungsschiene
- 16: Dichtlippe an 2
- 17: Dichtlippe an 2
- 18: Schlauchteil
- 19: Dichtlippe an 3
- 20: Dichtlippe an 3
- 21: Klemmprofil
- 22: Dichtfahne
- 23: geschlossener Ring von 1
- 24: Schlauchteil von 1

## Patentansprüche

1. Kurbelfenster in der Fahrerhaustür eines Lkw mit einer die Fensterscheibe einfassenden 2-teiligen, elastischen Fensterführungsschiene, deren äußerer Teil mit dem Türfalz und deren innerer Teil mit dem mit der Tür verschraubten inneren Fensterrahmen verbunden ist,
dadurch gekennzeichnet, daß die beiden Teile (1, 3) der Fensterführungsschiene (15) nach der zusammenführenden Montage ein geschlossenes 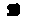 U" bilden und der äußere Teil (1) der Fensterführungsschiene (15) als geschlossener Ring (23) konfektioniert und mit zwei an seinem Umfang angeklebten oder anvulkanisierten Fensterführungsprofilstücken (6) verbunden ist

2. Kurbelfenster nach Anspruch 1, dadurch gekennzeichnet, daß der äußere Teil (1) der Fensterführungsschiene (15) als U-Profil mit einer von einem U-Schenkel um ca. 90° abgewinkelten, einstückig mit ihm verbundenen Fahne (2) mit zwei zusätzlichen Dichtlippen (16, 17) ausgebildet ist, wobei als eine außenseitige Fensterschachtabdichtung (4) ein Abschnitt des äußeren Teiles (1) der Fensterführungsschiene (15) mit abgeklinkter Fahne (2) vorgesehen ist.

3. Kurbelfenster nach Anspruch 1, dadurch gekennzeichnet, daß der innere Teil (3) der Fensterführungsschiene (15) als U-förmiges Klemmprofil mit einem kopfseitigen Schlauchteil (18) und zwei sich seitlich von den Schenkeln des U-Profils erstreckenden Dichtlippen (19, 20) ausgebildet ist, und daß als eine innenseitige Fensterschachtabdichtung (5) ein zu einer Fensterscheibe (12) und zu einer türinnenseitigen Türbrüstungsverkleidung (9) dichtend ausgebildetes Klemmprofil (21) mit Dichtfahne (22) vorgesehen ist.

4. Kurbelfenster nach den Ansprüchen 1 bis 3, dadurch gekennzeichnet, daß die Fensterscheibe (12) an mindestens drei Stellen von Dichtlippen (16, 17, 20) der beiden Teile (1, 3) der Führungsschiene (15) eingefaßt ist und die beiden Teile (1, 3) sich im U-Boden an mindestens zwei Stellen gegeneinander abdichten.

5. Kurbelfenster nach einem oder mehreren der Ansprüche 1 bis 4, dadurch gekennzeichnet, daß der äußere Teil (1) der Fensterführungsschiene (15) auf den Türfalz (7) aufgesteckt und mittels des an sich bekannten Rolforming-Verfahrens haftend zurollbar ist.

6. Kurbelfenster nach einem oder mehreren der Ansprüche 1 bis 5, dadurch gekennzeichnet, daß im inneren Bereich eines Türschachtes der Fahrerhaustür zur Aufnahme der abgekurbelten Scheibe (12) Halteprofile (13) für die in ihnen einliegenden Fensterführungsprofilstücke (6) angeordnet sind.

7. Verfahren zur Montage und Wirksamsetzung der Dichtungsfunktion des Kurbelfensters gemäß den Ansprüchen 1 bis 6, dadurch gekennzeichnet, daß nach Einlegen und Zurollen des äußeren Teiles (1) der Fensterführungsschiene (15) auf die Türfalze (7) - wobei die beiden Fensterführungsprofilstücke (6) nach unten hängend angeordnet sind - und nach Anbringen einer entsprechenden Fensterhebevorrichtung die Fensterscheibe (12) nach unten gekurbelt wird, wodurch die beiden nach unten hängenden Fensterführungsprofilstücke (6) automatisch in die im Türschacht angeordneten Halteprofile (13) eingedrückt werden.

## Claims

1. Wind-up window in the cab door of a truck with a bipartite elastic window guide rail which encloses the window pane and whose exterior part is connected with the door bead and whose interior part is connected with the interior window frame which in turn is screwed to the door, characterised in that, once assembled, the two parts (1, 3) of the window guide rail (15) form a closed "U" and that the exterior part (1) of the window guide rail (15) is designed as a closed ring (23) and is connected with two window guide sectional pieces (6) which are either glued or moulded on to its circumference.

2. Wind-up window according to Claim 1, characterised in that the exterior part (1) of the window guide rail (15) is shaped as a U-section with a tab (2) that has two additional sealing lips (16, 17) positioned at an angle of approximately 90° relative to one U-leg and connected as one piece with said leg, one section of the exterior part (1) of the window guide rail (15) with unlatched tab (2) being provided as an exterior window channel seal (4).

3. Wind-up window according to Claim 1, characterised in that the interior part (3) of the window guide rail (15) is formed as a U-shaped clamping section with a hose portion (18) at the top and two sealing lips (19, 20) extending laterally from the legs of the U-section and that a clamping section (21) with sealing tab (22), which clamping section (21) has a sealing function in respect of a window pane (12) and a door chord cladding (9) on the inside of the door, is provided for sealing the inside of the window channel (5).

4. Wind-up window according to Claims 1 to 3, characterised in that the window pane (12) is enclosed at at least three points by sealing lips (16, 17, 20) of the two parts (1, 3) of the guide rail (15) and that the two parts (1, 3) seal each other at at least two points on the U-bottom.

5. Wind-up window according to one or several of Claims 1 to 4, characterised in that the exterior part (1) of the window guide rail (15) is fitted to the door bead (7) and can be rolled shut in an adhesive manner by means of the well-known roll-forming method.

6. Wind-up window according to one or several of Claims 1 to 5, characterised in that in the inner area of the door channel of the cab door support sections (13) for the window guide sectional pieces (6) inserted in said support sections (13) are fitted for supporting the pane (12) when wound down.

7. Method for assembling and putting into action the sealing parts of the wind-up window according to Claims 1 to 6, characterised in that after the exterior part (1) of the window guide rail (15) has been inserted and rolled up towards the door bead (7) - the two window guide sectional pieces (6) being arranged in a suspended manner - and, after a suitable window wind-up device has been fitted, the window pane (12) is wound downwards, whereby the two suspended window guide sectional pieces (6) are automatically pressed into the support sections (13) fitted in the door channel.

## Revendications

1. Fenêtre à lève-vitre dans la porte de la cabine de conducteur d'un camion, avec un rail de guidage de fenêtre élastique, en deux parties enserrant la vitre de fenêtre, rail dont la partie extérieure est reliée à la feuillure de porte et dont la partie intérieure est reliée au cadre intérieur de fenêtre, boulonné avec la porte,
fenêtre à lève-vitre, caractérisée en ce que,
les deux parties (1, 3) du rail de guidage de fenêtre (15) forment, après le montage les réunissant, un « U » fermé, et la partie extérieure (1) du rail de guidage de fenêtre (15) est réalisée sous la forme d'un anneau fermé (23) et reliée à deux morceaux de profilé de guidage de fenêtre (6) collés ou vulcanisés sur son pourtour.

2. Fenêtre à lève-vitre selon la revendication 1,
caractérisée en ce que,
la partie extérieure (1) du rail de guidage de fenêtre (15) est constituée sous la forme d'un profilé en U avec un talon (2) coudé à environ 90° à partir d'une branche en U, et relié d'une seule pièce à celle-ci par deux lèvres additionnelles d'étanchéité (16, 17), une section de la partie extérieure (1) du rail de guidage de fenêtre (15) étant prévue sous la forme d'une garniture d'étanchéité de puits de fenêtre (4), avec un talon qui va en s'amenuisant (2).

3. Fenêtre à lève-vitre selon la revendication 1,
caractérisée en ce que
la partie intérieure (3) du rail de guidage de fenêtre (15) est constituée sous la forme d'un profilé de serrage en U avec une pièce en forme de tuyau (18), en tête, et deux lèvres d'étanchéité (19, 20) s'étendant latéralement à partir des branches du profilé en U, et
on prévoit un profilé de serrage (21) avec un talon d'étanchéité (22) servant de garniture d'étanchéité de puits de fenêtre (5) située du côté intérieur, profilé de serrage (21) constitué de façon étanche par rapport à une vitre de fenêtre (12) et à un revêtement d'appui de porte (9) situé du côté intérieur de la porte.

4. Fenêtre à lève-vitre selon les revendications 1 à 3,
caractérisée en ce que,
la vitre de fenêtre (12) est serrée en au moins trois endroits par des lèvres d'étanchéité (16, 17, 20) des deux parties (1, 3) du rail de guidage (15), et
les deux parties (1, 3) se rejoignent l'une contre l'autre de façon étanche en au moins deux endroits dans le fond en U.

5. Fenêtre à lève-vitre selon l'une ou plusieurs des revendications 1 à 4,
caractérisée en ce que,
la partie extérieure (1) du rail de guidage de fenêtre (15) est enfilée sur la feuillure de porte (7) et peut s'enrouler de façon adhésive au moyen d'un procédé d'enroulage connu en soi.

6. Fenêtre à lève-vitre selon l'une ou plusieurs des revendications 1 à 5,
caractérisée en ce que
dans la zone intérieure d'un puits de porte de cabine de conducteur, on dispose pour recevoir la vitre (12) descendue par la manivelle, des profilés de maintien (13) pour les morceaux de profilés de guidage de fenêtre (6) introduits dans ces profilés de maintien.

7. Procédé servant à monter et à rendre opérationnel le système d'étanchéité de la fenêtre à lève-vitre selon les revendications 1 à 6,
procédé caractérisé en ce que,
après avoir introduit et enroulé la partie extérieure (1) du rail de guidage de fenêtre (15) sur la feuillure de porte (7), les deux morceaux (6) du profilé de guidage de fenêtre étant disposés en pendant vers le bas, et après avoir mis en place un dispositif de levage de glace correspondant, on abaisse la vitre de fenêtre vers le bas par la manivelle, grâce à quoi les deux morceaux du profilé de guidage de fenêtre (6) qui pendent vers le bas, sont automatiquement enfoncés dans le profilé de maintien (13) disposé dans le puits de porte.
